# EUROPEAN PATENT APPLICATION

(11) **EP 4 590 048 A1**
(43) Date of publication of application: **23.07.2025**
(21) Application number: 23876658.8
(22) Date of filing: 09.10.2023
(51) Int. Cl.: H04W 72/12, H04L 1/00

(54) **UPLINK CONTROL INFORMATION TRANSMISSION METHOD AND APPARATUS, AND TERMINAL**

(30) Priority: 10.10.2022 CN 202211235984
(71) Applicant: Vivo Mobile Communication Co., Ltd., Dongguan, Guangdong 523863 (CN)
(72) Inventor: TAMRAKAR, Rakesh, Dongguan, Guangdong 523863 (CN); LI, Na, Dongguan, Guangdong 523863 (CN); WU, Hao, Dongguan, Guangdong 523863 (CN); LIU, Hao, Dongguan, Guangdong 523863 (CN)
(74) Representative: Murgitroyd & Company
(86) International application number: PCT/CN2023/123596
(87) International publication number: WO 2024/078456

(57) **Abstract**

This application discloses an uplink control information transmission method and apparatus, and a terminal, and belongs to the communication field. The uplink control information transmission method in embodiments of this application includes: A terminal maps uplink control information UCI to N codewords among M codewords used for uplink transmission to perform uplink transmission, where M is a positive integer greater than or equal to 2, and N is a positive integer less than or equal to M.

## Description

### CROSS-REFERENCE TO RELATED APPLICATION

This application claims priority to Chinese Patent Application 202211235984.2 filed on October 10, 2022, which is incorporated herein by reference in its entirety.

### TECHNICAL FIELD

This application belongs to the field of communication technologies, and specifically, to an uplink control information transmission method and apparatus, and a terminal.

### BACKGROUND

In a related technology, when a transmission rank is less than or equal to 4, only one codeword (which may alternatively be referred to as a transport block (Transport Block, TB)) is supported for transmission. Transmission on one codeword means that a network-side device indicates one modulation and coding scheme (Modulation and Coding Scheme, MCS) when scheduling uplink data. During uplink 8-antenna transmission, a maximum transmission rank may be equal to 8. In other words, a maximum of eight layers of data can be simultaneously transmitted. In a case that the transmission rank is greater than 4, a terminal may support simultaneous transmission on two codewords. When the terminal needs to report uplink control information (Uplink Control Information, UCI) to a base station, and the terminal can simultaneously send two codewords on an uplink channel, how to multiplex the UCI to the uplink channel becomes a problem that needs to be urgently resolved.

### SUMMARY

Embodiments of this application provide an uplink control information transmission method and apparatus, and a terminal, to resolve a problem of how to multiplex UCI to an uplink channel when a terminal can simultaneously send two codewords.

According to a first aspect, an uplink control information transmission method is provided, and the method includes:
a terminal maps uplink control information UCI to N codewords among M codewords used for uplink transmission to perform uplink transmission, where M is a positive integer greater than or equal to 2, and N is a positive integer less than or equal to M.

According to a second aspect, an uplink control information transmission apparatus is provided, including:
a first execution module, which determines N codewords among M codewords used for uplink transmission; and
a first transmission module, which maps UCI to the N codewords among the M codewords used for uplink transmission to perform uplink transmission, where M is a positive integer greater than or equal to 2, and N is a positive integer less than or equal to M.

According to a third aspect, an uplink control information transmission method is provided, and the method includes:
sending, by a network-side device, first control signaling to a terminal, where the first control signaling indicates the terminal to map UCI to N codewords among M codewords used for uplink transmission to perform uplink transmission, and M is a positive integer greater than or equal to 2, and N is a positive integer less than or equal to M.

According to a fourth aspect, an uplink control information transmission apparatus is provided, including:
a second execution module, which determines first control signaling; and
a second transmission module, which sends the first control signaling to a terminal, where the first control signaling indicates the terminal to map UCI to N codewords among M codewords used for uplink transmission to perform uplink transmission, and M is a positive integer greater than or equal to 2, and N is a positive integer less than or equal to M.

According to a fifth aspect, a terminal is provided. The terminal includes a processor and a memory. The memory stores a program or instructions that are executable on the processor, and when the program or the instructions are executed by the processor, steps of the method according to the first aspect are implemented.

According to a sixth aspect, a terminal is provided, including a processor and a communication interface. The processor determines N codewords among M codewords used for uplink transmission, and the communication interface maps UCI to the N codewords among the M codewords used for uplink transmission to perform uplink transmission.

According to a seventh aspect, a network-side device is provided. The network-side device includes a processor and a memory. The memory stores a program or instructions that are executable on the processor, and when the program or the instructions are executed by the processor, steps of the method according to the third aspect are implemented.

According to an eighth aspect, a network-side device is provided, including a processor and a communication interface. The processor determines first control signaling, and the communication interface sends the first control signaling to a terminal.

According to a ninth aspect, an uplink control information transmission system is provided, including: a terminal and a network-side device, where the terminal may perform steps of the uplink control information transmission method according to the first aspect, and the network-side device may perform steps of the uplink control information transmission method according to the third aspect.

According to a tenth aspect, a readable storage medium is provided. The readable storage medium stores a program or instructions. When the program or the instructions are executed by a processor, steps of the method according to the first aspect are implemented, or steps of the method according to the third aspect are implemented.

According to an eleventh aspect, a chip is provided. The chip includes a processor and a communication interface. The communication interface is coupled to the processor. The processor runs a program or instructions, to implement the method according to the first aspect or implement the method according to the third aspect.

According to a twelfth aspect, a computer program/program product is provided. The computer program/program product is stored in a storage medium, and the computer program/program product is executed by at least one processor, to implement steps of the uplink control information transmission method according to the first aspect or steps of the uplink control information transmission method according to the third aspect.

In embodiments of this application, uplink control information UCI is mapped to N codewords among M codewords used for uplink transmission to perform uplink transmission, to resolve a problem about how to transmit the UCI.

### BRIEF DESCRIPTION OF DRAWINGS

FIG. 1 is a schematic diagram of a structure of a radio communication system to which an embodiment of this application is applicable;
FIG. 2 is a schematic flowchart of an uplink control information transmission method according to an embodiment of this application;
FIG. 3 is a schematic diagram of a structure of an uplink control information transmission apparatus according to an embodiment of the present application;
FIG. 4 is a schematic flowchart of an uplink control information transmission method according to an embodiment of this application;
FIG. 5 is a schematic diagram of a structure of an uplink control information transmission apparatus according to an embodiment of the present application;
FIG. 6 is a schematic diagram of a structure of a communication device according to an embodiment of this application;
FIG. 7 is a schematic diagram of a structure of a terminal for implementing an embodiment of this application; and
FIG. 8 is a schematic diagram of a structure of a network-side device for implementing an embodiment of this application.

### DESCRIPTION OF EMBODIMENTS

The following clearly describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application shall fall within the protection scope of this application.

In the specification and claims of this application, the terms "first", "second", and the like are intended to distinguish between similar objects but do not necessarily indicate a specific order or sequence. It should be understood that the terms used in this way are exchangeable in a proper case, so that the embodiments of this application can be implemented in an order different from the order shown or described herein, and objects distinguished by "first" and "second" are usually of a same category and a quantity of the objects is not limited. For example, there may be one or more first objects. In addition, "and/or" in the specification and the claims represents at least one of connected objects, and a character "/" usually indicates an "or" relationship between associated objects.

It should be noted that, the technology described in the embodiments of this application is not limited to a long term evolution (Long Term Evolution, LTE)/LTE-advanced (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually interchangeably used, and the technologies described may be applied to the systems and radio technologies mentioned above, and may also be applied to other systems and radio technologies. The following descriptions describe a new radio (New Radio, NR) system for illustration, and NR terms are used in most of the following descriptions, but these technologies can also be applied to applications other than NR system applications, such as a 6th generation (6th Generation, 6G) communication system.

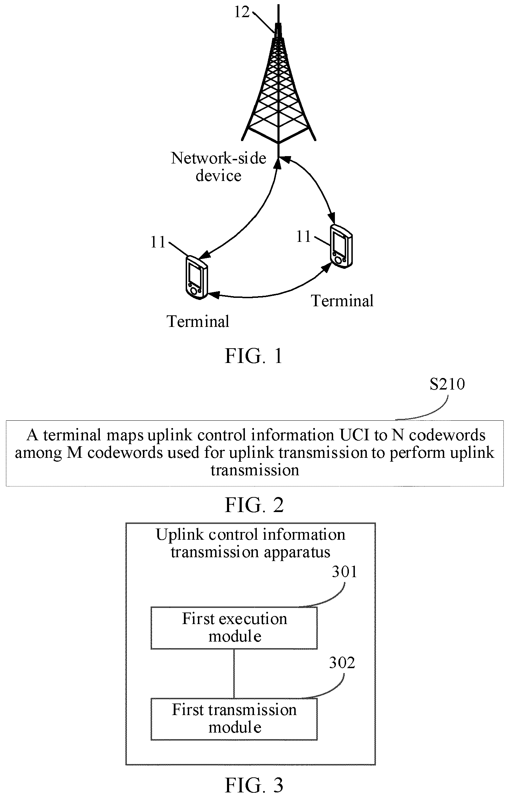

FIG. 1 is a block diagram of a radio communication system to which an embodiment of this application is applicable. The radio communication system includes a terminal 11 and a network-side device 12. The terminal 11 may be a terminal-side device like a mobile phone, a tablet personal computer (Tablet Personal Computer), a laptop computer (Laptop Computer) which is alternatively referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart households (a home device having a wireless communication capability, for example, a refrigerator, a television, a washing machine, or furniture), a game console, a personal computer (personal computer, PC), a teller machine, or a self-service machine. The wearable device includes a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. It should be noted that a specific type of the terminal 11 is not limited in embodiments of this application. The network-side device 12 may include an access network device or a core network device. The access network device 12 may alternatively be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolution node B, a transmitting receiving point (Transmitting Receiving Point, TRP), or any other suitable term in the art, as long as the same technical effects are achieved. The base station is not limited to a particular technical vocabulary. It should be noted that, the base station in the NR system is used only as an example for description in the embodiments of this application, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, the core network device in the NR system is used only as an example for description in the embodiments of this application, but a specific type of the core network device is not limited.

An uplink control information transmission method and apparatus, and a terminal that are provided in embodiments of this application are described in detail below with reference to the accompanying drawings through some embodiments and application scenarios thereof.

As shown in FIG. 2, an embodiment of this application provides an uplink control information transmission method, and an execution body of the method is a terminal. In other words, the method may be performed by software or hardware installed on the terminal. The method includes the following steps.

S210: A terminal maps uplink control information UCI to N codewords among M codewords used for uplink transmission to perform uplink transmission, where M is a positive integer greater than or equal to 2, and N is a positive integer less than or equal to M.

When performing uplink transmission, the terminal supports simultaneous transmission of a plurality of codewords, namely, M codewords. The uplink transmission is to perform transmission towards a network-side device through an uplink channel, for example, a physical uplink control channel (Physical Uplink Control Channel, PUCCH) or a physical uplink shared channel (Physical Uplink Shared Channel, PUSCH).

When the terminal reports the UCI, the terminal needs to determine the quantity M of codewords used for uplink transmission and the quantity N of codewords, among the M codewords, for mapping the UCI. For example, if the quantity M of codewords used by the terminal for uplink transmission is a positive integer greater than or equal to 2, the UCI may be mapped to one codeword among the M codewords for transmission, or the UCI may be mapped to N codewords for transmission, where N is less than or equal to M. If the quantity of codewords used by the terminal for uplink transmission is 1, the UCI is mapped to the codeword for transmission. The quantities M and N may be set based on an actual requirement. However, for brevity, in the following embodiments, an example in which M is 2 and N is 1 or 2 is used for description.

In an implementation, step S210 includes:
in a case that N is 1, the terminal maps the UCI to a first codeword among the M codewords used for uplink transmission to perform uplink transmission.

The first codeword may be determined in various manners. For example, the first codeword may be determined and indicated by the network-side device or may be determined by the terminal. In an implementation, the first codeword is determined by at least one of the following:
an L-th codeword among the M codewords, where L is a positive integer less than or equal to M, and the terminal may fixedly map the UCI to the L-th codeword among the M codewords, for example, always map the UCI to the first codeword or a second codeword among the two codewords used for uplink transmission;
a codeword whose modulation and coding scheme (Modulation and coding scheme, MCS) has a highest index value among the M codewords, where if the M codewords correspond to different MCSs, the terminal may map the UCI to the codeword whose MCS has the highest index value; or if the M codewords correspond to a same MCS, the UCI may be mapped to a default codeword;
a codeword having a largest quantity of transmission layers among the M codewords, where if transmission ranks or quantities of transmission layers corresponding to the M codewords are different, the terminal may map the UCI to a codeword having a highest transmission rank or the largest quantity of transmission layers; or if transmission ranks or quantities of transmission layers corresponding to the M codewords are the same, the terminal may map the UCI to a default codeword;
a codeword indicated by a first signaling field, where in other words, the first codeword is determined based on a direct or indirect indication of the first signaling field in received control signaling; and the first signaling field may include at least one of the following: a transmitted precoding matrix indicator (Transmitted Precoding Matrix Indicator, TPMI) signaling field, a sounding reference signal resource indicator (Sounding Reference Signal Resource Indicator, SRI) signaling field, and a demodulation reference signal (Demodulation Reference Signal, DMRS) signaling field; and
a codeword other than a codeword used for data transmission among the M codewords, where in other words, the UCI and the data are not multiplexed on a same codeword.

The terminal may determine the first codeword based on one or more of the foregoing terms.

In an implementation, when mapping the UCI to the first codeword, the terminal performs rate matching (rate matching) and/or data puncturing (puncturing) on the first codeword. Optionally, no data is transmitted on a time-frequency unit (Resource Element, RE) corresponding to a codeword other than the first codeword among the M codewords.

In another implementation, step S210 includes:
in a case that N is a positive integer greater than or equal to 2, the terminal maps, by using a first multiplexing rule, the UCI to the N codewords among the M codewords used for uplink transmission to perform uplink transmission.

In an implementation, the first multiplexing rule includes at least one of the following:
repeatedly transmitting the UCI on the N codewords, and respectively performing modulation and coding on each codeword, where
the N codewords correspond to a same modulation and coding method or correspond to different modulation and coding methods, for example, when performing uplink data scheduling, the network-side device indicates that MCSs corresponding to the N codewords may be the same or different, or
the N codewords correspond to a same modulation method or correspond to different modulation methods, for example, the N codewords may use a same encoding method and different modulation methods, or the N codewords may use different encoding methods and a same modulation method;
dividing the UCI into N data blocks and respectively mapping the N data blocks to the N codewords, where division of the N data blocks may be specifically determined based on an MCS corresponding to each codeword and a quantity of transmission layers corresponding to each codeword;
mapping channel status information CSI part one (CSI part one) of the UCI to one codeword, where in other words, it is ensured that the CSI part one is not mapped across codewords;
repeatedly transmitting the CSI part one of the UCI on the N codewords;
mapping a wideband part of the CSI part one and a wideband part of CSI part two (CSI part two) of the UCI on a same codeword; and
mapping the UCI to all transmission layers corresponding to the N codewords.

In an implementation, in a case that the N codewords correspond to a same MCS, a modulation and coding method of the UCI is determined based on the same MCS, and the same MCS may be indicated by the network-side device.

In an implementation, in a case that the N codewords correspond to different MCSs, a modulation and coding method of the UCI is determined by at least one of the following:
one of the different MCSs corresponding to the N codewords, for example, an MCS having a lowest or highest index value;
a reference MCS, where the reference MCS may be indicated by the network-side device, agreed on by a protocol, or determined by the terminal; and
a power offset corresponding to the N codewords, where the power offset may be represented as a betaoffset.

In an implementation, the betaoffset corresponding to the N codewords is determined by at least one of the following:
a higher layer signaling indicator;
a physical layer signaling indicator;
an MCS;
a quantity of transmission layers; and
a delta (delta) value.

In an implementation, for betaoffsets corresponding to the N codewords, N betaoffsets may be separately indicated by using high layer signaling, physical layer signaling, or the like.

In another implementation, only one betaoffset may be indicated, and other N-1 betaoffsets may be determined based on MCSs, quantities of transmission layers, or the like corresponding to the codewords.

In another implementation, in a case that only one betaoffset is indicated, other N-1 betaoffsets may be sequentially determined based on a fixed delta value.

It can be learned from the technical solutions in the foregoing embodiments that, in this embodiment of this application, the uplink control information UCI is mapped to the N codewords among the M codewords used for uplink transmission to perform uplink transmission, so as to resolve a problem about how to transmit the UCI.

Based on the foregoing embodiments, in an implementation, before step S210, the method further includes the following step.

S200: The terminal determines the quantity N of codewords used to map the UCI.

In an implementation, the terminal may determine, based on first control signaling received from the network-side device, the quantity N of codewords used to map the UCI.

In an implementation, the first control signaling may indicate at least one of the following:
the quantity M of codewords used by the terminal for uplink transmission;
the quantity N of codewords used to map the UCI; and
the MCS corresponding to each codeword.

The network-side device may explicitly signal the first control signaling to indicate the terminal to map the UCI to one codeword or a plurality of codewords. The first control signaling may be in various forms. For brevity, in the following embodiments, an explicit signaling indication method for the first control signaling is described by using downlink control information (Downlink Control Information, DCI) as an example.

In an implementation, the indication may be performed by using a separate second signaling field in the first control signaling. For example, in a case that N is 1 or 2, a 1-bit (bit) second signaling field may be introduced into the DCI. When the second signaling field is "1", it indicates that the UCI is multiplexed on one codeword, and when the second signaling field is "0", it indicates that the UCI is multiplexed on two codewords.

In another implementation, a 1-bit third information field may be introduced into the DCI, and is jointly used for an indication with an existing uplink shared channel indicator (UpLink Shared Channel indicator, UL-SH indicator) signaling field (1-bit). There are a total of four states, which separately indicate whether the UCI can be multiplexed on two codewords used for uplink transmission. For example, the states may separately indicate: The first codeword is a codeword only used for an uplink shared channel (UL-SH only), or the second codeword is a codeword for UL-SH only, or both codewords are codewords for UL-SH only.

In another implementation, corresponding UL-SH indicator signaling fields may be separately introduced for the two codewords used for uplink transmission, to separately indicate whether the UCI can be multiplexed on each codeword.

In another implementation, the terminal may alternatively determine, based on at least one of the following, the quantity N of codedwords used to map the UCI:
an overhead of the UCI, for example, a quantity of bits;
a type of the UCI; and
a time domain feature of the UCI.

The terminal may determine, based on at least one of the overhead, the type, and the time domain feature of the UCI, whether the UCI is multiplexed on one codeword or a plurality of codewords.

In an implementation, in a case that the first control signaling indicates at least one of the following, N is 1:
the uplink transmission is only used for transmitting UCI (UCI only); and
the uplink transmission is used for transmitting UCI and uplink data, and the quantity M of codewords used for uplink transmission is greater than or equal to 2.

In an implementation, in a case that the first control signaling indicates that the uplink transmission is only used for transmitting UCI, the terminal determines that the quantity M of codewords used for uplink transmission is 1, or performs uplink transmission by using a transmission rank less than or equal to 4. In a case that the first control signaling indicates UCI only, even if it is indicated to use a plurality of codewords for uplink transmission, the terminal may return to a single codeword for uplink transmission, or uplink transmission is limited to being performed based on a transmission rank less than or equal to 4.

It can be learned from the technical solutions in the foregoing embodiments that, in this embodiment of this application, the quantity N of codewords to which the UCI is mapped is determined by using an explicit or implicit method, and then the UCI is mapped to the N codewords according to the multiplexing rule corresponding to N, to resolve the problem about how to transmit the UCI.

The uplink control information transmission method provided in the embodiments of this application may be performed by an uplink control information transmission apparatus. In the embodiments of this application, the uplink control information transmission apparatus provided in the embodiments of this application is described by using an example in which the uplink control information transmission apparatus performs the uplink control information transmission method.

As shown in FIG. 3, the uplink control information transmission apparatus includes: a first execution module 301 and a first transmission module 302.

The first execution module 301 determines N codewords among M codewords used for uplink transmission. The first transmission module 302 maps UCI to the N codewords among the M codewords used for uplink transmission to perform uplink transmission, where M is a positive integer greater than or equal to 2, and N is a positive integer less than or equal to M.

Optionally, the first transmission module 302, in a case that N is 1, maps the UCI to a first codeword among the M codewords used for uplink transmission to perform uplink transmission.

Optionally, the first codeword is determined by at least one of the following:
an L-th codeword among the M codewords, where L is a positive integer less than or equal to M;
a codeword whose modulation and coding scheme MCS has a highest index value among the M codewords;
a codeword having a largest quantity of transmission layers among the M codewords;
a codeword indicated by a first signaling field; and
a codeword other than a codeword used for data transmission among the M codewords.

Optionally, the first signaling field includes at least one of the following:
a transmitted precoding matrix indicator TPMI signaling field;
a sounding reference signal resource indicator SRI signaling field; and
a demodulation reference signal DMRS signaling field.

Optionally, the first transmission module 302 performs at least one of the following operations on the first codeword:
rate matching; and
data puncturing.

Optionally, the first transmission module 302 transmits no data on a time-frequency unit corresponding to a codeword other than the first codeword among the M codewords.

Optionally, the first transmission module 302, in a case that N is a positive integer greater than or equal to 2, maps, by using a first multiplexing rule, the UCI to the N codewords among the M codewords used for uplink transmission to perform uplink transmission.

The first multiplexing rule includes at least one of the following:
repeatedly transmitting the UCI on the N codewords, and respectively performing modulation and coding on each codeword, where
the N codewords correspond to a same modulation and coding method or correspond to different modulation and coding methods, or
the N codewords correspond to a same modulation method or correspond to different modulation methods;
dividing the UCI into N data blocks and respectively mapping the N data blocks to the N codewords;
mapping channel status information CSI part one of the UCI to one codeword;
repeatedly transmitting the CSI part one of the UCI on the N codewords;
mapping a wideband part of the CSI part one and a wideband part of CSI part two of the UCI on a same codeword; and
mapping the UCI to all transmission layers corresponding to the N codewords.

Optionally, in a case that the N codewords correspond to a same MCS, a modulation and coding method of the UCI is determined based on the same MCS.

Optionally, in a case that the N codewords correspond to different MCSs, a modulation and coding method of the UCI is determined by at least one of the following:
one of the different MCSs corresponding to the N codewords;
a reference MCS; and
a power offset betaoffset corresponding to the N codewords.

Optionally, the betaoffset corresponding to the N codewords is determined by at least one of the following:
a higher layer signaling indicator;
a physical layer signaling indicator;
an MCS;
a quantity of transmission layers; and
a delta value.

It can be learned from the technical solutions in the foregoing embodiments that, in this embodiment of this application, the uplink control information UCI is mapped to the N codewords among the M codewords used for uplink transmission to perform uplink transmission, so as to resolve a problem about how to transmit the UCI.

Based on the foregoing embodiments, optionally, the first execution module 301 determines, based on at least one of the following, the quantity N of codewords used to map the UCI:
first control signaling received from a network-side device;
an overhead of the UCI;
a type of the UCI; and
a time domain feature of the UCI.

Optionally, in a case that the first control signaling indicates at least one of the following, N is 1:
the uplink transmission is only used for transmitting UCI; and
the uplink transmission is used for transmitting UCI and uplink data, and the quantity M of codewords used for uplink transmission is greater than or equal to 2.

Optionally, the first transmission module 302, in a case that the first control signaling indicates that the uplink transmission is only used for transmitting UCI, determines that the quantity M of codewords used for uplink transmission is 1, or performs uplink transmission by using a transmission rank less than or equal to 4.

It can be learned from the technical solutions in the foregoing embodiments that, in this embodiment of this application, the quantity N of codewords to which the UCI is mapped is determined by using an explicit or implicit method, and then the UCI is mapped to the N codewords according to the multiplexing rule corresponding to N, to resolve the problem about how to transmit the UCI.

The uplink control information transmission apparatus in this embodiment of this application may be an electronic device, for example, an electronic device having an operating system, or a component in an electronic device, for example, an integrated circuit or a chip. The electronic device may be a terminal, or may be a device other than a terminal. For example, the terminal may include but is not limited to the foregoing listed types of the terminal 11, and the another device may be a server, a network attached storage (Network Attached Storage, NAS), or the like. This is not specifically limited in embodiments of this application.

The uplink control information transmission apparatus provided in this embodiment of this application can implement each process implemented in the method embodiment in FIG. 2, and the same technical effects can be achieved. To avoid repetition, details are not described herein again.

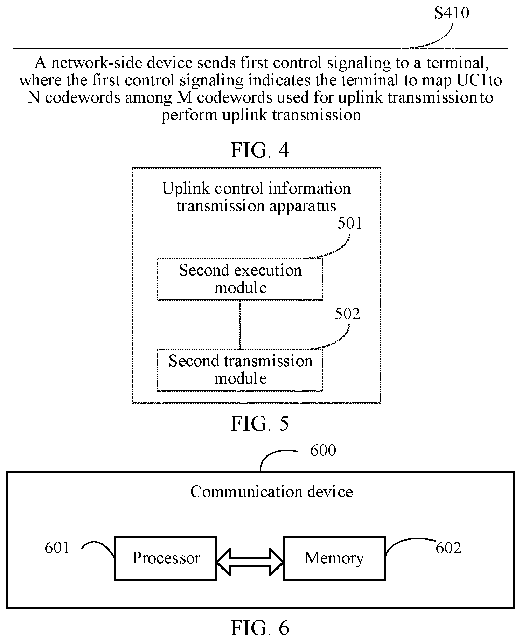

As shown in FIG. 4, an embodiment of this application provides an uplink control information transmission method, and an execution body of the method is a network-side device. In other words, the method may be performed by software or hardware installed on the terminal. The method includes the following steps.

S410: A network-side device sends first control signaling to a terminal, where the first control signaling indicates the terminal to map UCI to N codewords among M codewords used for uplink transmission to perform uplink transmission, and M is a positive integer greater than or equal to 2, and N is a positive integer less than or equal to M.

Optionally, in a case that the first control signaling indicates that the uplink transmission is only used for transmitting UCI, the first control signaling further indicates that the quantity M of codewords used by the terminal for uplink transmission is 1 or a transmission rank less than or equal to 4 is used for uplink transmission.

It can be learned from the technical solutions in the foregoing embodiments that, in this embodiment of this application, the first control signaling is sent to the terminal, and the first control signaling indicates the terminal to map the UCI to the N codewords among the M codewords used for uplink transmission to perform uplink transmission, so as to resolve the problem about how to transmit the UCI.

The uplink control information transmission method provided in the embodiments of this application may be performed by an uplink control information transmission apparatus. In the embodiments of this application, the uplink control information transmission apparatus provided in the embodiments of this application is described by using an example in which the uplink control information transmission apparatus performs the uplink control information transmission method.

As shown in FIG. 5, the uplink control information transmission apparatus includes: a second execution module 501 and a second transmission module 502.

The second execution module 501 determines first control signaling. The second transmission module 502 sends the first control signaling to a terminal, where the first control signaling indicates the terminal to map UCI to N codewords among M codewords used for uplink transmission to perform uplink transmission, and M is a positive integer greater than or equal to 2, and N is a positive integer less than or equal to M.

Optionally, in a case that the first control signaling indicates that the uplink transmission is only used for transmitting UCI, the first control signaling further indicates that the quantity M of codewords used by the terminal for uplink transmission is 1 or a transmission rank less than or equal to 4 is used for uplink transmission.

It can be learned from the technical solutions in the foregoing embodiments that, in this embodiment of this application, the first control signaling is sent to the terminal, and the first control signaling indicates the terminal to map the UCI to the N codewords among the M codewords used for uplink transmission to perform uplink transmission, so as to resolve the problem about how to transmit the UCI.

The uplink control information transmission apparatus in this embodiment of this application may be an electronic device, for example, an electronic device having an operating system, or a component in an electronic device, for example, an integrated circuit or a chip. The electronic device may be a terminal, or may be a device other than a terminal. For example, the terminal may include but is not limited to the foregoing listed types of the terminal 11, and the another device may be a server, a network attached storage (Network Attached Storage, NAS), or the like. This is not specifically limited in embodiments of this application.

The uplink control information transmission apparatus provided in this embodiment of this application can implement each process implemented in the method embodiment in FIG. 4, and the same technical effects can be achieved. To avoid repetition, details are not described herein again.

Optionally, as shown in FIG. 6, an embodiment of this application further provides a communication device 600, including a processor 601 and a memory 602. The memory 602 stores a program or instructions that are executable on the processor 601. For example, when the communication device 600 is a terminal, and the program or the instructions are executed by the processor 601, the steps of the foregoing uplink control information transmission method embodiments are implemented, and the same technical effects can be achieved. When the communication device 600 is a network-side device, and the program or the instructions are executed by the processor 601, the steps of the foregoing uplink control information transmission method embodiments are implemented, and the same technical effects can be achieved. To avoid repetition, details are not described herein again.

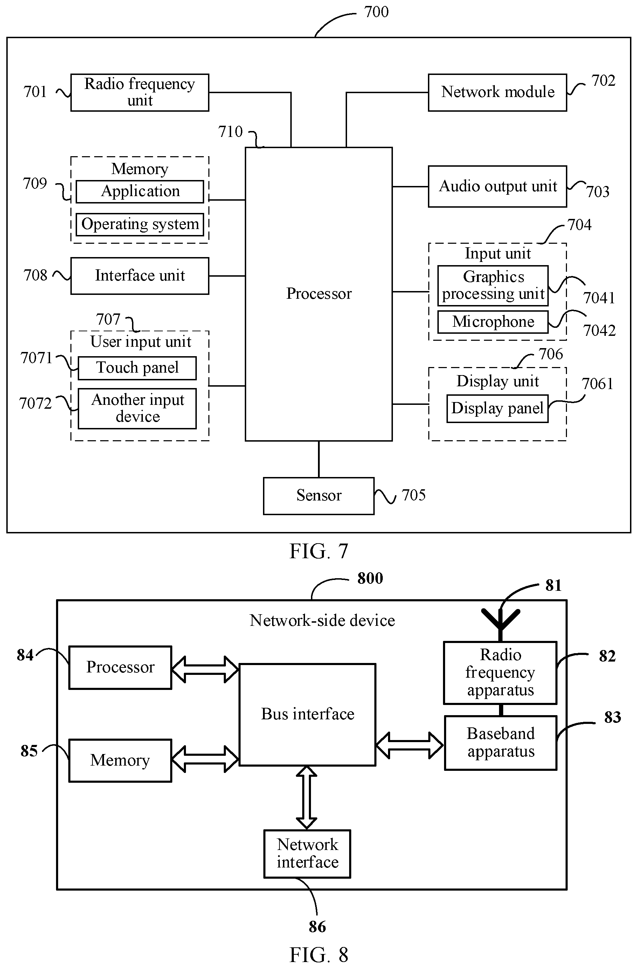

An embodiment of this application further provides a terminal, including a processor and a communication interface. The processor determines N codewords among M codewords used for uplink transmission, and the communication interface maps UCI to the N codewords among the M codewords used for uplink transmission to perform uplink transmission. This terminal embodiment corresponds to the foregoing method embodiments on the terminal side. Each implementation process and implementation of the foregoing method embodiments may be applied to this terminal embodiment, and the same technical effects can be achieved. Specifically, FIG. 7 is a schematic diagram of a hardware structure of a terminal for implementing an embodiment of this application.

The terminal 700 includes but is not limited to: at least some components in a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) that supplies power to each component. The power supply may be logically connected to the processor 710 through a power management system, so that functions such as charging management, discharging management, and power consumption management are implemented through the power management system. The terminal structure shown in FIG. 7 does not constitute a limitation on the terminal. The terminal may include more or fewer components than those shown in the figure, or some components may be combined, or different component arrangements may be used. Details are not described herein again.

It should be understood that in this embodiment of this application, the input unit 704 may include a graphics processing unit (Graphics Processing Unit, GPU) 7041 and a microphone 7042, and the graphics processing unit 7041 processes a static picture or video image data obtained by an image capturing apparatus (for example, a camera) in a video capturing mode or an image capturing mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a function key (such as a volume control key or a switch key), a track ball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may store a software program or instructions and various data. The memory 709 may mainly include a first storage area that stores a program or instructions and a second storage area that stores data, where the first storage area may store an operating system, an application or an instruction required for at least one function (for example, a sound playing function, an image display function, and the like), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these memories and any other memory of a suitable type.

The processor 710 may include one or more processing units. Optionally, the processor 710 may integrate an application processor and a modem processor. The application processor mainly processes operations of an operating system, a user interface, an application, and the like, and the modem processor like a baseband processor mainly processes a wireless communication signal. It may be understood that the modem processor may not be integrated into the processor 710.

The processor 710 determines N codewords among M codewords used for uplink transmission.

The radio frequency unit 701 maps UCI to the N codewords among the M codewords used for uplink transmission to perform uplink transmission, where M is a positive integer greater than or equal to 2, and N is a positive integer less than or equal to M.

Optionally, the radio frequency unit 701, in a case that N is 1, maps the UCI to a first codeword among the M codewords used for uplink transmission to perform uplink transmission.

Optionally, the first codeword is determined by at least one of the following:
an L-th codeword among the M codewords, where L is a positive integer less than or equal to M;
a codeword whose modulation and coding scheme MCS has a highest index value among the M codewords;
a codeword having a largest quantity of transmission layers among the M codewords;
a codeword indicated by a first signaling field; and
a codeword other than a codeword used for data transmission among the M codewords.

Optionally, the first signaling field includes at least one of the following:
a transmitted precoding matrix indicator TPMI signaling field;
a sounding reference signal resource indicator SRI signaling field; and
a demodulation reference signal DMRS signaling field.

Optionally, the radio frequency unit 701 performs at least one of the following operations on the first codeword:
rate matching; and
data puncturing.

Optionally, the radio frequency unit 701 transmits no data on a time-frequency unit corresponding to a codeword other than the first codeword among the M codewords.

Optionally, the radio frequency unit 701, in a case that N is a positive integer greater than or equal to 2, maps, by using a first multiplexing rule, the UCI to the N codewords among the M codewords used for uplink transmission to perform uplink transmission.

The first multiplexing rule includes at least one of the following:
repeatedly transmitting the UCI on the N codewords, and respectively performing modulation and coding on each codeword, where
the N codewords correspond to a same modulation and coding method or correspond to different modulation and coding methods, or
the N codewords correspond to a same modulation method or correspond to different modulation methods;
dividing the UCI into N data blocks and respectively mapping the N data blocks to the N codewords;
mapping channel status information CSI part one of the UCI to one codeword;
repeatedly transmitting the CSI part one of the UCI on the N codewords;
mapping a wideband part of the CSI part one and a wideband part of CSI part two of the UCI on a same codeword; and
mapping the UCI to all transmission layers corresponding to the N codewords.

Optionally, in a case that the N codewords correspond to a same MCS, a modulation and coding method of the UCI is determined based on the same MCS.

Optionally, in a case that the N codewords correspond to different MCSs, a modulation and coding method of the UCI is determined by at least one of the following:
one of the different MCSs corresponding to the N codewords;
a reference MCS; and
a power offset betaoffset corresponding to the N codewords.

Optionally, the betaoffset corresponding to the N codewords is determined by at least one of the following:
a higher layer signaling indicator;
a physical layer signaling indicator;
an MCS;
a quantity of transmission layers; and
a delta value.

The embodiments of this application can resolve the problem about how to transmit the UCI.

Based on the foregoing embodiments, optionally, the processor 710 further determines, based on at least one of the following, the quantity N of codewords used to map the UCI:
first control signaling received from a network-side device;
an overhead of the UCI;
a type of the UCI; and
a time domain feature of the UCI.

Optionally, in a case that the first control signaling indicates at least one of the following, N is 1:
the uplink transmission is only used for transmitting UCI; and
the uplink transmission is used for transmitting UCI and uplink data, and the quantity M of codewords used for uplink transmission is greater than or equal to 2.

Optionally, the radio frequency unit 701, in a case that the first control signaling indicates that the uplink transmission is only used for transmitting UCI, determines that the quantity M of codewords used for uplink transmission is 1, or performs uplink transmission by using a transmission rank less than or equal to 4.

The embodiments of this application can resolve the problem about how to transmit the UCI.

An embodiment of this application further provides a network-side device, including a processor and a communication interface. The processor determines first control signaling, and the communication interface sends the first control signaling to a terminal. This network-side device embodiment corresponds to the foregoing method embodiments of the network-side device. Each implementation process and implementation of the foregoing method embodiments may be applied to this network-side device embodiment, and the same technical effects can be achieved.

Specifically, an embodiment of this application further provides a network-side device. As shown in FIG. 8, the network-side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-transmitted information, and transmits the information to the radio frequency apparatus 82; and the radio frequency apparatus 82 processes the received information and then transmits the information through the antenna 81.

The method performed by the network-side device in the foregoing embodiments may be implemented in the baseband apparatus 83. The baseband apparatus 83 includes a baseband processor.

The baseband apparatus 83 may, for example, include at least one baseband panel. A plurality of chips are arranged on the baseband panel. As shown in FIG. 8, one of the chips is, for example, the baseband processor, and is connected to the memory 85 through a bus interface, to call a program in the memory 85, so as to perform the operations performed by the network-side device shown in the foregoing method embodiments.

The network-side device may further include a network interface 86. The interface is, for example, a common public radio interface (common public radio interface, CPRI).

Specifically, the network-side device 800 in this embodiment of the present invention further includes: instructions or programs stored in a memory 85 and that are executable on the processor 84. The processor 84 calls the instructions or programs in the memory 85 to execute the method perform by the modules in FIG. 5, and achieves the same technical effects. To avoid repetition, details are not described herein again.

An embodiment of this application further provides a readable storage medium, where the readable storage medium stores a program or instructions. When the program or the instructions are executed by a processor, the processes of the foregoing uplink control information transmission method embodiments are implemented, and the same technical effects can be achieved. To avoid repetition, details are not described herein again.

The processor may be a processor of the terminal in the foregoing embodiments. The readable storage medium includes a computer-readable storage medium, for example, a computer read-only memory ROM, a random access memory RAM, a magnetic disk, or an optical disk.

An embodiment of the present application further provides a chip. The chip includes a processor and a communication interface. The communication interface is coupled to the processor. The processor is configured to run a program or instructions, to implement the processes of the uplink control information transmission method embodiments, and the same technical effects can be achieved. To avoid repetition, details are not described herein again.

It should be understood that the chip mentioned in this embodiment of this application may alternatively be referred to as a system on chip, a system chip, a chip system, a system on a chip, or the like.

An embodiment of this application further provides a computer program/program product. The computer program/program product is stored in a storage medium, and the computer program/program product is executed by at least one processor, to implement the processes of the uplink control information transmission method embodiments, and the same technical effects can be achieved. To avoid repetition, details are not described herein again.

An embodiment of this application further provides an uplink control information transmission system, including: a terminal and a network-side device, where the terminal may be configured to perform steps of the uplink control information transmission method, and the network-side device may be configured to perform steps of the uplink control information transmission method.

It is worthwhile to note that, in this specification, the terms "include", "comprise", or any other variants thereof are intended to cover a non-exclusive inclusion, so that a process, a method, a thing, or an apparatus that includes a list of elements not only includes those elements but also includes other elements which are not expressly listed, or further includes elements inherent to such a process, method, thing, or apparatus. An element limited by a phrase "includes a..." does not, without more limitations, preclude existence of an additional identical element in a process, method, object, or apparatus that includes the element. Moreover, it should be noted that the scope of the method and apparatus of embodiments of this application is not limited to performing functions in the order shown or discussed, but may further include performing functions in a substantially concurrent manner or in reverse order depending on the related function. For example, the described method may be performed in an order different from that described, and various steps may be further added, omitted, or combined. Moreover, features described with reference to some examples may be combined in other examples.

According to the descriptions in the foregoing implementations, a person skilled in the art may clearly learn that the method according to the foregoing embodiments may be implemented by software and a necessary general hardware platform, or certainly, by using hardware. However, in most cases, the former is a better implementation. Based on such an understanding, the technical solutions of this application essentially or the part contributing to the conventional technology may be implemented in a form of a computer software product. The computer software product is stored in a storage medium (such as an ROM/RAM, a magnetic disk, and an optical disk) and includes several instructions configured to enable a terminal (which may be a mobile phone, a computer, a server, an air conditioner, a network device, or the like) to execute the method according to embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make modifications without departing from the purposes of this application and the protection scope of the claims, and all the modifications shall fall within the protection of this application.

## Claims

1. An uplink control information transmission method, comprising:
mapping, by a terminal for uplink transmission, uplink control information UCI to N codewords among M codewords used for uplink transmission, wherein M is a positive integer greater than or equal to 2, and N is a positive integer less than or equal to M.

2. The method according to claim 1, wherein the mapping, by a terminal for uplink transmission, uplink control information UCI to N codewords among M codewords used for uplink transmission comprises:
in a case that N is 1, mapping, by the terminal for uplink transmission, the UCI to a first codeword among the M codewords used for uplink transmission, wherein
the first codeword is determined by at least one of the following:
an L-th codeword among the M codewords, wherein L is a positive integer less than or equal to M;
a codeword whose modulation and coding scheme MCS has a highest index value among the M codewords;
a codeword having a largest quantity of transmission layers among the M codewords;
a codeword indicated by a first signaling field; and
a codeword other than a codeword used for data transmission among the M codewords.

3. The method according to claim 2, wherein the first signaling field comprises at least one of the following:
a transmitted precoding matrix indicator TPMI signaling field;
a sounding reference signal resource indicator SRI signaling field; and
a demodulation reference signal DMRS signaling field.

4. The method according to claim 2, wherein the method further comprises:
performing at least one of the following operations on the first codeword:
rate matching; and
data puncturing.

5. The method according to claim 2, wherein no data is transmitted on a time-frequency unit corresponding to a codeword other than the first codeword among the M codewords.

6. The method according to claim 1, wherein the mapping, by a terminal for uplink transmission, uplink control information UCI to N codewords among M codewords used for uplink transmission comprises:
in a case that N is a positive integer greater than or equal to 2, mapping, by the terminal, by using a first multiplexing rule, the UCI to the N codewords among the M codewords used for uplink transmission to perform uplink transmission, wherein
the first multiplexing rule comprises at least one of the following:
repeatedly transmitting the UCI on the N codewords, and respectively performing modulation and coding on each codeword, wherein
the N codewords correspond to a same modulation and coding method or correspond to different modulation and coding methods, or
the N codewords correspond to a same modulation method or correspond to different modulation methods;
dividing the UCI into N data blocks and respectively mapping the N data blocks to the N codewords;
mapping channel status information CSI part one of the UCI to one codeword;
repeatedly transmitting the CSI part one of the UCI on the N codewords;
mapping a wideband part of the CSI part one and a wideband part of CSI part two of the UCI on a same codeword; and
mapping the UCI to all transmission layers corresponding to the N codewords.

7. The method according to claim 6, wherein in a case that the N codewords correspond to a same MCS, a modulation and coding method of the UCI is determined based on the same MCS.

8. The method according to claim 6, wherein in a case that the N codewords correspond to different MCSs, a modulation and coding method of the UCI is determined by at least one of the following:
one of the different MCSs corresponding to the N codewords;
a reference MCS; and
a power offset betaoffset corresponding to the N codewords.

9. The method according to claim 8, wherein the betaoffset corresponding to the N codewords is determined by at least one of the following:
a higher layer signaling indicator;
a physical layer signaling indicator;
an MCS;
a quantity of transmission layers; and
a delta value.

10. The method according to claim 1, wherein before the mapping, by a terminal for uplink transmission, uplink control information UCI to N codewords, the method further comprises:
determining, by the terminal, based on at least one of the following, a quantity N of codewords used to map the UCI:
first control signaling received from a network-side device;
an overhead of the UCI;
a type of the UCI; and
a time domain feature of the UCI.

11. The method according to claim 10, wherein in a case that the first control signaling indicates at least one of the following, N is 1:
the uplink transmission is only used for transmitting UCI; and
the uplink transmission is used for transmitting UCI and uplink data, and a quantity M of codewords used for uplink transmission is greater than or equal to 2.

12. The method according to claim 11, wherein in a case that the first control signaling indicates that the uplink transmission is only used for transmitting UCI, determining, by the terminal, that the quantity M of codewords used for uplink transmission is 1, or performing uplink transmission by using a transmission rank less than or equal to 4.

13. An uplink control information transmission apparatus, comprising:
a first execution module, which determines N codewords among M codewords used for uplink transmission; and
a first transmission module, which maps UCI to the N codewords among the M codewords used for uplink transmission to perform uplink transmission, wherein M is a positive integer greater than or equal to 2, and N is a positive integer less than or equal to M.

14. An uplink control information transmission method, comprising:
sending, by a network-side device, first control signaling to a terminal, wherein the first control signaling indicates the terminal to map UCI to N codewords among M codewords used for uplink transmission to perform uplink transmission, and M is a positive integer greater than or equal to 2, and N is a positive integer less than or equal to M.

15. The method according to claim 14, wherein in a case that the first control signaling indicates that the uplink transmission is only used for transmitting UCI, the first control signaling further indicates that a quantity M of codewords used by the terminal for uplink transmission is 1 or a transmission rank less than or equal to 4 is used for uplink transmission.

16. An uplink control information transmission apparatus, comprising:
a second execution module, which determines first control signaling; and
a second transmission module, which sends the first control signaling to a terminal, wherein the first control signaling indicates the terminal to map UCI to N codewords among M codewords used for uplink transmission to perform uplink transmission, and M is a positive integer greater than or equal to 2, and N is a positive integer less than or equal to M.

17. A terminal, comprising a processor and a memory, wherein the memory stores a program or instructions that are executable on the processor, and when the program or the instructions are executed by the processor, the steps of the uplink control information transmission method according to any one of claims 1 to 12 are implemented.

18. A network-side device, comprising a processor and a memory, wherein the memory stores a program or instructions that are executable on the processor, and when the program or the instructions are executed by the processor, the steps of the uplink control information transmission method according to claim 14 or 15 are implemented.

19. A readable storage medium, wherein the readable storage medium stores a program or indications, and when the program or the indications are executed by a processor, the steps of the uplink control information transmission method according to any one of claims 1 to 12 are implemented, or the steps of the uplink control information transmission method according to claim 14 or 15 are implemented.

20. A computer program product, wherein the computer program product is stored in a storage medium, and when the computer program product is executed by at least one processor, the uplink control information transmission method according to any one of claims 1 to 12 is implemented, or the uplink control information transmission method according to claim 14 or 15 is implemented

21. A chip, wherein the chip comprises a processor and a communication interface, the communication interface is coupled to the processor, and the processor is configured to run a program or instructions, to implement the uplink control information transmission method according to any one of claims 1 to 12, or implement the uplink control information transmission method according to claim 14 or 15.

22. A terminal, wherein the terminal performs the steps of the uplink control information transmission method according to any one of claims 1 to 12.

23. A network-side device, wherein the network-side device performs the steps of the uplink control information transmission method according to claim 14 or 15.
